# EUROPEAN PATENT SPECIFICATION

(11) **EP 1 487 891 B1**
(45) Date of publication and mention of the grant of the patent: **07.06.2006**
(21) Application number: 03745036.8
(22) Date of filing: 21.03.2003
(51) Int. Cl.: C08F 290/06, C08L 51/08, C08F 2/44, C08F 283/12, C08F 292/00, C08F 290/14, C09D 4/00, C09D 4/06, C08K 9/04

(54) **CURABLE COMPOSITION, CURED PRODUCT, AND LAMINATE**
HÄRTBARE ZUSAMMENSETZUNG, GEHÄRTETES PRODUKT UND LAMINAT
COMPOSITION DURCISSABLE, PRODUIT DURCI, ET STRATIFIE

(30) Priority: 22.03.2002 JP 2002080995
(43) Date of publication of application: 22.12.2004
(73) Proprietor: DSM IP Assets B.V., 6411 TE Heerlen (NL); JSR Corporation, Tokyo 104-8410 (JP); Japan Fine Coatings Co., Ltd., Tokyo 104-8410 (JP)
(72) Inventor: SHINOHARA, Noriyasu, Tokyo 104-8410 (JP); SUZUKI, Yasunobu, Tokyo 104-8410 (JP); YAMAGUCHI, Yoshikazu, Tokyo 104-8410 (JP); TANABE, Takayoshi, Tokyo 104-8410 (JP)
(74) Representative: Hoogendam, Gerrie Christine
(86) International application number: PCT/NL2003/000219
(87) International publication number: WO 2003/080749

(56) References cited:
- WO-A-01/12690
- WO-A-01/48073
- WO-A-01/53420

## Description

### Detailed Description of the Invention

### Field of the Invention

The present invention relates to a curable composition, a cured product and a laminate thereof. More particularly, the present invention relates to a curable composition exhibiting excellent applicability and capable of forming a coating (film) with high hardness, a high refractive index, superior scratch resistance, and excellent adhesion to substrates as well as a layer with a low refractive index on the surface of various substrates such as plastics (polycarbonate, polymethylmethacrylate, polystyrene, polyester, polyolefin, epoxy resins, melamine resins, triacetyl cellulose resins, ABS resins, AS resins, norbornene resins, etc.), metals, wood, papers, glasses, and slates. The present invention also relates to a cured product made from the curable composition and a laminate with low reflectance and superior chemical resistance. The curable composition, cured product, and laminate of the present invention are suitable for use as a protective coating material to prevent scratches or stains on plastic optical parts, touch panels, film-type liquid crystal elements, plastic containers, or flooring materials, wall materials, and artificial marbles which are used for architectural interior finish; an antireflection film for film-type liquid crystal elements, touch panels, or plastic optical parts; an adhesive or sealing material for various substrates, and a vehicle for printing ink; and the like. The curable composition, cured product, and laminate can be particularly suitable for an antireflection film.

### Prior Art

In recent years, a curable composition exhibiting excellent applicability and capable of forming a cured film excelling in hardness, scratch resistance, abrasion resistance, low curling properties, adhesion, transparency, chemical resistance, and appearance is desired as a protective coating material to prevent scratches or stains on the surface of various substrates, an adhesive or sealing material for various substrates, or a vehicle for printing ink.

In addition to the above requirements, capability of forming a cured film with a high refractive index has been demanded for a curable composition used as an antireflection film for film-type liquid crystal elements, touch panels, or plastic optical parts.

Various types of compositions have been proposed to satisfy such demands. However, a curable composition satisfying the following characteristics (1) to (3) has not been developed yet: (1) a curable composition having excellent applicability; (2) a cured film produced thereof having high hardness, high refractive index, superior scratch resistance, and excellent adhesion to substrates and to films with a low refractive index; and (3) a laminate comprising the cured film and a film with a low refractive index applied thereon having low reflectance and superior chemical resistance.

For example, Japanese Patent Publication No. 21815/1987 proposed utilization of a composition comprising acrylate and particles of colloidal silica of which the surface is modified with methacryloxysilane for a radiation (photo) curable coating material. This type of radiation curable composition is recently used in a number of applications due to the excellent applicability and the like.

However, although a laminate formed by applying a film with a low refractive index to the cured product of such a composition exhibits an improved antireflection effect as an antireflection film, chemical resistance of the laminate was inadequate.

### Problems to be Solved by the Invention

The present invention has been achieved in view of the above problems. An object of the present invention is to provide a curable composition exhibiting excellent applicability and capable of forming a coating (film) with high hardness, high refractive index, superior scratch resistance, and excellent adhesion to substrates and materials having a low refractive index, a cured product of the curable composition, and a laminate with low reflectance and superior chemical resistance.

### Means for Solving the Problems

As a result of extensive studies to achieve the above object, the present inventors have found that a product satisfying all the above characteristics can be obtained by a curable composition comprising (A) particles prepared by bonding oxide particles of a specific element with an organic compound which comprises a polymerizable group, (B) a compound having a melamine group and habing no polymerizable unsaturated group and (C) a compound having at least two polymerizable groups in the molecule other than the component (B).

### Preferred Embodiment of the Invention

The curable composition, and a cured product and a laminate thereof of the present invention will be described in more detail below.

### I. Curable composition

The curable composition comprises (A) particles prepared by bonding at least one oxide of an element selected from the group consisting of silicon, aluminum, zirconium, titanium, zinc, germanium, indium, tin, antimony, and cerium (hereinafter may be referred to as "oxide particles (Aa)"), and an organic compound which comprises a polymerizable group (hereinafter may be referred to as "organic compound (Ab)") (hereinafter may be referred to as "reactive particles (A)" or "component (A)"), (B) a melamine compound having no polymerizable unsaturated group (hereinafter may be referred to as "compound (B)" or "component (B)"), and (C) a compound having at least two polymerizable unsaturated groups in the molecule (hereinafter may be referred to as "compound (C)" or "component (C)").

Preferably, the curable composition of the present invention contains polymerizable groups of compounds (A), (B) and (C) that are polymerizable unsaturated groups.

Each component of the curable composition of the present invention will be described in more detail.

### 1. Reactive particles (A)

The reactive particles (A) used in the present invention are produced by bonding the oxide particles (Aa) of at least one element selected from the group consisting of silicon, aluminum, zirconium, titanium, zinc, germanium, indium, tin, antimony, and cerium, and the organic compound (Ab) containing a polymerizable group (preferably an organic compound comprising the group shown by the formula (1). 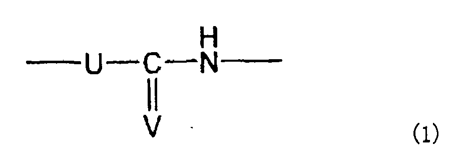 wherein U represents NH, O (oxygen atom), or S (sulfur atom), and V represents O or S.

### (1) Oxide particles (Aa)

For obtaining a colorless cured coating from the curable composition, the oxide particles (Aa) used in the present invention should preferably be oxide particles of at least one element selected from the group consisting of silicon, aluminum, zirconium, titanium, zinc, germanium, indium, tin, antimony, and cerium.

Examples of these oxide particles (Aa) are, particles of silica, alumina, zirconia, titanium oxide, zinc oxide, germanium oxide, indium oxide, tin oxide, indium-tin oxide (ITO), antimony oxide and cerium oxide. Of these, particles of silica, alumina, zirconia, and antimony oxide are preferable from the viewpoint of high hardness. These compounds may be used either individually or in combinations of two or more. The oxide particles (Aa) are preferably in the form of a powder or a solvent dispersion sol. If the oxide particles are in the form of a solvent dispersion sol, an organic solvent is preferable as a dispersion medium from the viewpoint of mutual solubility with other components and dispersibility. Examples of such an organic solvent include alcohols such as methanol, ethanol, isopropanol, butanol, and octanol; ketones such as acetone, methyl ethyl ketone, methyl isobutyl ketone, and cyclohexanone; esters such as ethyl acetate, butyl acetate, ethyl lactate, and γ-butyrolactone, propylene glycol monomethyl ether acetate, and propylene glycol monoethyl ether acetate; ethers such as ethylene glycol monomethyl ether and diethylene glycol monobutyl ether; aromatic hydrocarbons such as benzene, toluene, and xylene; amides such as dimethylformamide, dimethylacetamide, and N-methylpyrrolidone; and the like. Of these, methanol, isopropanol, butanol, methyl ethyl ketone, methyl isobutyl ketone, ethyl acetate, butyl acetate, toluene, and xylene are preferable.

The number average particle diameter of the oxide particles (Aa) can be from 0.001 µm to 2 µm, preferably from 0.001 µm to 0.2 µm, and still more preferably from 0.001 µm to 0.1 µm. If the number average particle diameter is more than 2 µm, transparency of the cured product and the surface conditions of the film tend to be impaired. Moreover, various surfactants and amines may be added to improve dispersibility of particles.

Among silicon oxide particles, given as examples of commercially available products of silica particles are colloidal silica available under the trade names Methanol Silica Sol, IPA-ST, MEK-ST, NBA-ST, XBA-ST, DMAC-ST, ST-UP, ST-OUP, ST-20, ST-40, ST-C, ST-N, ST-O, ST-50, ST-OL, (all manufactured by Nissan Chemical Industries, Ltd.), and the like. As powdery silica, products available under the trade names AEROSIL 130, AEROSIL 300, AEROSIL 380, AEROSIL TT600, and AEROSIL OX50 (manufactured by Japan Aerosil Co., Ltd.), Sildex H31, H32, H51, H52, H121, H122 (manufactured by Asahi Glass Co., Ltd.), E220A, E220 (manufactured by Nippon Silica Industrial Co., Ltd.), SYLYSIA470 (manufactured by Fuji Silycia Chemical Co., Ltd.) and SG Flake (manufactured by Nippon Sheet Glass Co., Ltd.), and the like can be given.

Given as commercially available products of aqueous dispersion products of alumina are Alumina Sol-100, -200, -520 (manufactured by Nissan Chemical Industries, Ltd.); as an isopropanol dispersion of alumina, AS-150I (manufactured by Sumitomo Osaka Cement Co., Ltd.); as a toluene dispersion of alumina, AS-150T (manufactured by Sumitomo Osaka Cement Co., Ltd.); as a toluene dispersion of zirconia, HXU-110JC (manufactured by Sumitomo Osaka Cement Co., Ltd.); as an aqueous dispersion product of zinc antimonate powder, Celnax (manufactured by Nissan Chemical Industries, Ltd.); as powders and solvent dispersion products of alumina, titanaium oxide, tin oxide, indium oxide, zinc oxide, etc., Nano Tek, for example, (manufactured by Cl Kasei Co., Ltd.); as an aqueous dispersion sol of antimony dope-tin oxide, SN-100D (manufactured by Ishihara Sangyo Kaisha, Ltd.); as an ITO powder, a product manufactured by Mitsubishi Material Co., Ltd.; and as an aqueous dispersion of cerium oxide, Needral (manufactured by Taki Chemical Co., Ltd.).

The shape of oxide particles (Aa) may be for example globular, hollow, porous, rod-like, plate-like, fibrous, or amorphous, with a globular shape being preferable. The specific surface of the oxide particles (Aa) determined by the BET method using nitrogen is preferably in the range of 10 to 1000 m²/g, and more preferably 100 to 500 m²/g. The oxide particles (Aa) can be used either in the form of a dry powder or a dispersion in water or an organic solvent. For example, a dispersion liquid of fine particles of oxide known in the art as a solvent dispersion sol of these oxides can be used. Use of a solvent dispersion sol of oxide is particularly preferable in the application in which excellent transparency of cured products is required.

### (2) Organic compound (Ab)

The organic compound (Ab) used in the present invention is preferably a compound having a polymerizable unsaturated group in the molecule, and more preferably a specific organic compound comprising the group [-U-C (=V)-NH-] shown by the above formula (1). The organic compound (Ab) preferably comprises a group represented by [-O-C(=O)-NH-] and at least one of the groups represented by [-O-C(=S)-NH-] and [-S-C(=O)-NH-]. It is preferable that the organic compound (Ab) have a silanol group in the molecule or form a silanol group by hydrolysis.

### 1) Polymerizable unsaturated group

There are no specific limitations to the preferred polymerizable unsaturated groups included in the organic compound (Ab). An acryloyl group, methacryloyl group, vinyl group, propenyl group, butadienyl group, styryl group, ethynyl group, cinnamoyl group, malate group, and acrylamide group can be given as preferable examples.

This polymerizable unsaturated group is a structural unit to effect an addition polymerization by active radicals.

### 2) Group shown by the above formula (1)

There are six types for the group [-U-C (=V)-NH-] of the formula (1) contained in the specific organic compound, specifically, they are [-O-C(=O)-NH-], [-O-C(=S)-NH-], [-S-C(=O)-NH-], [-NH-C(=O)-NH-], [-NH-C(=S)-NH-], and [-S-C(=S)-NH-]. These groups may be used either individually or in combinations of two or more. Of these, the combined use of the group [-O-C(=O)-NH-] and at least one of the groups [-O-C(=S)-NH-] and [-S-C(=O)-NH-] is preferable for ensuring excellent heat stability.

The group [-U-C (=V)-NH-] of the formula (1) is considered to generate a moderate cohesive force by a hydrogen bond among molecules, which provides the cured product with characteristics such as superior mechanical strength, excellent adhesion to substrates, and good heat resistance.

### 3) Silanol group or a group which forms a silanol group by hydrolysis

The organic compound (Ab) is preferably a compound having a silanol group (hereinafter may be referred to as "silanol group-containing compound") or a compound which forms a silanol group by hydrolysis (hereinafter may be referred to as "silanol group-forming compound"). As the silanol group-forming compound, a compound having an alkoxy group, aryloxy group, acetoxy group, amino group, a halogen atom, or the like on a silicon atom can be given, with a compound including an alkoxy group or aryloxy group on a silicon atom, specifically, an alkoxysilyl group-containing compound or an aryloxysilyl group-containing compound being preferable.

The silanol group or the silanol group-forming site of the silanol group-forming compound is the structural unit which bonds with the oxide particles (Aa) by condensation or condensation following hydrolysis.

### 4) Preferable embodiment

The compound shown by the following formula (4) can be given as a preferable specific example of the organic compound (Ab): 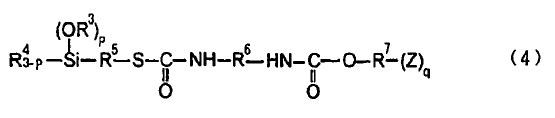 wherein R³ and R⁴ individually represent a hydrogen atom or an alkyl group or aryl group having 1-8 carbon atoms such as a methyl group, ethyl group, propyl group, butyl group, octyl group or an arylgroup having 6-12 C atoms for example a phenyl group or xylyl group; R⁵ is a divalent organic group having between 1 and 12 C atoms and has an aliphatic structure (which may be linear, branched, or cyclic) or an aromatic structure; R⁶ is a divalent organic group having a molecular weight from 14 to 10,000, preferably from 76 to 500; R⁷ is an organic group of a (q+1) valence and preferably selected from the group consisting of linear, branched, or cyclic, saturated or unsaturated hydrocarbon groups; R³, R⁴, R⁵, R⁶ and R⁷ may contain hetero atoms like for example O, N, S, P; Z is a monovalent organic group having a polymerizable unsaturated group in the molecule which causes an inter-molecular cross-linking reaction in the presence of reactive radicals; q is an integer preferably from 1 to 20, and more preferably from 1 to 10, and most preferably from 1 to 5; and p is an integer from 1-3.

Examples of the group represented by [(R³O)pR⁴₃₋ₚSi-], are a trimethoxy silyl group, triethoxy silyl group, triphenoxy silyl group, methyldimethoxy silyl group and dimethylmethoxy silyl group. Of these groups, trimethoxysilyl group, triethoxysilyl group, and the like are most preferred.

Examples of organic groups Z are an acryloyl group, methacryloyl group, vinyl group, propenyl group, butadienyl group, styryl group, ethynyl group, cinnamoyl group, malate group, and acrylamide group.

The organic compound (Ab) used in the present invention can be synthesized using a method described in Japanese Patent Application Laid-open No. 100111/1997, for example.

The proportion of the organic compound (Ab) bonded to the oxide particles (Aa) is preferably 0.01 wt% or more, more preferably 0.1 wt% or more, and particularly preferably 1 wt% or more, of 100 wt% of the reactive particles (A) (total weight of oxide particles (Aa) and organic compound (Ab)). If the proportion is less than 0.01 wt%, dispersibility of the reactive particles (A) in the composition may be inadequate, whereby transparency and scratch resistance of the resulting cured product may be impaired. The proportion of the oxide particles (Aa) among the raw materials in the preparation of the reactive particles (A) is preferably 5-99 wt%, and still more preferably 10-98 wt%.

The proportion (content) of the reactive particles (A) to be incorporated in the composition is preferably 5-90 wt%, and still more preferably 65-85 wt% of 100 wt% of the composition (total weight of reactive particles (A), compound (B), and compound (C)). If the proportion is less than 5 wt%, products with a high refractive index may not be obtained. If the proportion is more than 90 wt%, film formability may be inadequate.

The content of the oxide particles (Aa) constituting the reactive particles (A) in the composition is preferably 65-90 wt%.

The content of the reactive particles (A) refers to the solid content, which does not include the amount of solvents when used in the form of a solvent dispersion sol.

### 2. Compound (B)

The compound (B) used in the present invention is a melamine compound having no polymerizable unsaturated group. The compound (B) is preferably a compound shown by formula (2). 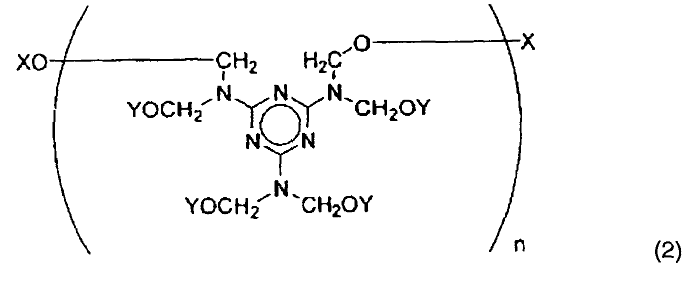 wherein X individually represents a hydrogen atom, an organic group having 1-20 C-atoms, preferably a hydrogen atom or an alkyl group having 1-10 carbon atoms, Y individually represents a hydrogen atom or an organic group having 1-20 C-atoms, preferably a hydrogen atom or an alkyl group having 1-10 carbon atoms or a monovalent organic group shown by the following formula (3), and n is an integer from 1 to 20, 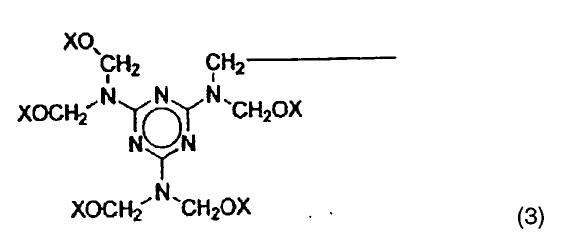 wherein X individually represents a hydrogen atom or an organic group having 1-20 carbon atoms, preferably a hydrogen atom or an alkyl group having 1-10 C-atoms. The organic or alkyl groups may be linear, branched, cyclic, substituted or unsubstituted.

The compound (B) is suitably used to increase the refractive index of the cured product and improve chemical resistance of the laminate.

Examples of organic groups having 1-20 carbon atoms represented by X and Y in the formulas (2) and (3) are linear or branched alkyl groups such as a methyl group, ethyl group, n-propyl group, and isopropyl group; aromatic groups like phenyl, tolyl, xylyl, and naphtyl. Of these, lower alkyl groups having 1-5 carbon atoms are preferable.
As X in the formulas (2) and (3), a methyl group, isobutyl group, sec-butyl group, and tert-butyl group are preferable.
Preferably, the substituent X in the formula (2) is preferably a methyl group, which gives the advantage of obtaining improved curability.

As Y in the formula (2), a methyl group, isobutyl group, sec-butyl group, tert-butyl group, and organic group shown by the formula (3) are preferable.

As commercially available products of the compound (B), Cymel 238, XV805, XM2819, Cymel 303 (manufactured by Mitsui-Cytec, Ltd.), Nikalac E-1201 (manufactured by Sanwa Chemical Co., Ltd.), and the like can be given.

The number average molecular weight of the compound (B) used in the present invention is preferably from 300 to 20,000. The number average molecular weight of the compound (B) is still more preferably 300 to 5,000. If the number average molecular weight is less than 500, chemical resistance of the resulting laminate may be insufficient. If the number average molecular weight exceeds 20,000, applicability may be insufficient.

The compound (B) may be used in combination of two or more. In the case where the compound (B) is the compound shown by the formula (2), two or more compounds in which X, Y, or n differs may be used in combination.

In particular, at least 25 mol% of substituents X and Y in formula (2) is preferably an isobutyl group. If the content of the isobutyl group is 25 mol% or more, the scratch resistance of the cured product is increased.

More preferably, an isobutyl group accounts for 40 mol% or more.

The amount of the compound (B) used in the present invention is preferably 0.01-50 wt%, and still more preferably 1-40 wt% of 100 wt% of the composition (reactive particles (A), compound (B), and compound (C) in total). If the amount is less than 0.01 wt%, chemical resistance of the laminate may be insufficient. If the amount exceeds 50 wt%, hardness of the cured product may be insufficient.

### 3. Compound (C)

Preferably compound (C) used in the present invention is a compound having two or more polymerizable unsaturated groups in the molecule other than the compound (B). The compound (C) is suitably used to increase film formability of the composition. Although there are no specific limitations to the compound (C) insofar as the compound has two or more polymerizable groups in the molecule, (meth)acrylic esters, vinyl compounds, and the like can be given as examples. Of these, (meth)acrylic esters are preferable.

The following compounds can be given as specific examples of the compound (C) used in the present invention.

Examples of (meth)acrylic esters are trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, glycerol tri(meth)acrylate, tris(2-hydroxyethyl) isocyanurate tri(meth)acrylate, ethylene glycol di(meth)acrylate, 1,3-butanediol di(meth)acrylate, 1,4-butanediol di(meth)acrylate, 1,6-hexanediol di(meth)acrylate, neopentyl glycol di(meth)acrylate, diethylene glycol di(meth)acrylate, triethylene glycol di(meth)acrylate, dipropylene glycol di(meth)acrylate, and bis(2-hydroxyethyl)isocyanurate di(meth)acrylate, poly(meth)acrylates of ethylene oxide or propylene oxide addition product to starting alcohols of these (meth)acrylates, oligoester (meth)acrylates, oligoether (meth)acrylates, oligourethane (meth)acrylates, and oligoepoxy (meth)acrylates having two or more (meth)acryloyl groups in the molecule. Of these, dipentaerythritol hexa(meth)acrylate, dipentaerythritol penta(meth)acrylate, pentaerythritol tetra(meth)acrylate, and ditrimethylolpropane tetra(meth)acrylate are preferable.

Examples of vinyl compounds are divinylbenzene, ethylene glycol divinyl ether, diethylene glycol divinyl ether and triethylene glycol divinyl ether.

Examples of commercially available products of the compound (C) are Aronix M-400, M-408, M-450, M-305, M-309, M-310, M-315, M-320, M-350, M-360, M-208, M-210, M-215, M-220, M-225, M-233, M-240, M-245, M-260, M-270, M-1100, M-1200, M-1210, M-1310, M-1600, M-221, M-203, TO-924, TO-1270, TO-1231, TO-595, TO-756, TO-1343, TO-902, TO-904, TO-905, TO-1330 (manufactured by Toagosei Co., Ltd.); KAYARAD D-310, D-330, DPHA, DPCA-20, DPCA-30, DPCA-60, DPCA-120, DN-0075, DN-2475, SR-295, SR-355, SR-399E, SR-494, SR-9041, SR-368, SR-415, SR-444, SR-454, SR-492, SR-499, SR-502, SR-9020, SR-9035, SR-111, SR-212, SR-213, SR-230, SR-259, SR-268, SR-272, SR-344, SR-349, SR-601, SR-602, SR-610, SR-9003, PET-30, T-1420, GPO-303, TC-120S, HDDA, NPGDA, TPGDA, PEG400DA, MANDA, HX-220, HX-620, R-551, R-712, R-167, R-526, R-551, R-712, R-604, R-684, TMPTA, THE-330, TPA-320, TPA-330, KS-HDDA, KS-TPGDA, KS-TMPTA (manufactured by Nippon Kayaku Co., Ltd.); Light Acrylate PE-4A, DPE-6A, DTMP-4A (manufactured by Kyoeisha Chemical Co., Ltd.).

The proportion of the compound (C) used in the present invention is preferably 10-80 wt%, and still more preferably 20-75 wt% of 100 wt% of the composition (total weight of reactive particles (A), compound (B), and compound (C)). If the proportion is less than 10 wt% or exceeds 80 wt%, a cured product with high hardness may not be obtained.

In addition, a compound having one polymerizable unsaturated group in the molecule may be added to the composition of the present invention other than the compound (C), as required.

### 4. Acid generator

In addition to the reactive particles (A), compound (B), and compound (C), (D) an acid generator (hereinafter referred to as "acid generator (D)") may be added to the composition of the present invention, as required.

As examples of the acid generator (D), a compound which thermally generates cations and a compound which generates cations upon irradiation with radioactive rays (light) known in the art can be given.

As examples of a compound which thermally generates cations, aliphatic sulfonic acid, aliphatic sulfonate, aliphatic carboxylic acid, aliphatic carboxylate, aromatic carboxylic acid, aromatic carboxylate, alkylbenzene sulfonic acid, alkylbenzene sulfonate, phosphate, metal salt, and the like can be given.

These compounds may be used either individually or in combinations of two or more.

As preferable examples of a compound which generates cations upon irradiation, an onium salt having a structure shown by the following formula (5) can be given.

This onium salt is a compound which liberates a Lewis acid upon exposure to light.

[R⁸ _{d}R⁹ ₑR¹⁰ _{f}R¹¹ _{g}W]^{+j}[MTⱼ₊ₖ]^{-j} (5)

wherein a cation is an onium ion; W is S, Se, Te, P, As, Sb, Bi, O, I, Br, Cl, or -N=N; R⁸, R⁹, R¹⁰, and R¹¹ are the same or different organic groups; d, e, f, and g are individually integers from 0 to 3, provided that (d + e + f + g) is equal to the valence of W; M is a metal or a metalloid which constitutes a center atom of the halide complex [MTⱼ₊ₖ] such as B, P, As, Sb, Fe, Sn, Bi, Al, Ca, In, Ti, Zn, Sc, V, Cr, Mn, and Co; Y is a halogen atom such as F, Cl, and Br; j is a net charge of a halide complex ion; and k is a valence.

As specific examples of an anion [MTⱼ₊ₖ] in the formula (5), tetrafluoroborate (BF₄⁻, hexafluorophosphate (PF₆⁻), hexafluoroantimonate (SbF₆⁻), hexafluoroarsenate (AsF₆⁻) and hexachloroantimonate (SbCl₆⁻) can be given.

In addition, an onium salt having an anion of the formula [MTₖ(OH)⁻] can also be used. Moreover, onium salts having other anions such as a perchloric acid ion (ClO₄⁻), trifluoromethanesulfonic acid ion (CF₃SO₃⁻), fluorosulfonic acid ion (FSO₃⁻), toluenesulfonic acid ion, trinitrobenzenesulfonic acid anion, and trinitrotoluenesulfonic acid anion can be used.

Of these onium salts, an aromatic onium salt is particularly effective as the acid generator (D). Particularly preferable onium salts are aromatic halonium salts disclosed in Japanese Patent Applications Laid-open No. 151996/1975 and No. 158680/1975, VIA group aromatic onium salts disclosed in Japanese Patent Applications Laid-open No. 151997/1975, No. 30899/1977, No. 55420/1981, and No. 125105/1980; VA group aromatic onium salts disclosed in Japanese Patent Application Laid-open No. 158698/1975; oxosulfoxonium salts disclosed in Japanese Patent Applications Laid-open No. 8428/1981, No. 149402/1981, and No. 192429/1982; aromatic diazonium salts disclosed in Japanese Patent Application Laid-open No. 17040/1974 and thiopyrylium salts disclosed in U.S. Patent No. 4,139,655. In addition, iron/allene complex initiators, aluminum complex/photolysis silicon compound initiators can also be given as examples.

These onium salts may be used either individually or in combinations of two or more.

As examples of commercially available products suitably used as the acid generator (D), Catalyst 4050 (manufactured by Mitsui-Cytec, Ltd.), UVI-6950, UVI-6970, UVI-6974, UVI-6990 (manufactured by Union Carbide Corp.), Adekaoptomer SP-150, SP-151, SP-170, SP-171 (manufactured by Asahi Denka Kogyo Co., Ltd.), Irgacure 261 (manufactured by Ciba Specialty Chemicals Co., Ltd.), CI-2481, Cl-2624, Cl-2639, Cl-2064 (manufactured by Nippon Soda Co., Ltd.), CD-1010, CD-1011, CD-1012 (manufactured by Sartomer Co., Ltd.), DTS-102, DTS-103, NAT-103, NDS-103, TPS-103, MDS-103, MPI-103, BBI-103 (manufactured by Midori Chemical Co., Ltd.), PCI-061 T, PCI-062T, PCI-020T, PCI-022T (manufactured by Nippon Kayaku Co., Ltd.), and the like can be given. Of these, UVI-6970, UVI-6974, UVI-6990, Adekaoptomer SP-150, SP-170, SP-171, CD-1012, and MPI-103 are particularly preferable for providing excellent surface curability to the resulting curable composition.

The amount of the acid generator (D) which is optionally used in the composition of the present invention is preferably 0.01-20 parts by weight, and still more preferably 0.1-10 parts by weight for 100 parts by weight of the composition (total weight of reactive particles (A), compound (B), and compound (C)). If the amount is less than 0.01 parts by weight, film formability may be inadequate. If the amount is more than 20 parts by weight, a cured product with high hardness may not be obtained.

### 5. Radical polymerization initiator (E)

In addition to the reactive particles (A), compound (B), and compound (C), (E) a radical polymerization initiator (hereinafter may be referred to as "radical polymerization initiator (E)") may be added to the composition of the present invention, as required.

As examples of the radical polymerization initiator (E), a compound which thermally generates active radicals (heat polymerization initiator) and a compound which generates active radicals upon irradiation with radioactive rays (light) (radiation (photo) polymerization initiator) known in the art can be given.

There are no specific limitations to the radiation (photo) polymerization initiator insofar as such an initiator decomposes upon irradiation and generates radicals to initiate polymerization. Examples of such an initiator include acetophenone, acetophenone benzyl ketal, 1-hydroxycyclohexyl phenyl ketone, 2,2-dimethoxy-1,2-diphenylethan-1-one, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, benzoin propyl ether, benzoin ethyl ether, benzyl dimethyl ketal, 1-(4-isopropylphenyl)-2-hydroxy-2- methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morpholino-propan-1-one, 2-benzyl-2-dimethylamino-1-(4-morpholinophenyl)-butanone-1,4-(2-hydroxyethoxy)phenyl-(2-hydroxy-2-propyl)ketone, 2,4,6-trimethylbenzoyl diphenylphosphine oxide, bis-(2,6-dimethoxybenzoyl)-2,4,4-trimethylpentylphosphine oxide, and oligo(2-hydroxy-2-methyl-1-(4-(1-methylvinyl)phenyl)propanone).

As examples of commercially available products of the radiation (photo) polymerization initiator, Irgacure 184, 369, 651, 500, 819, 907, 784, 2959, CGI1700, CGI1750, CGI1850, CG24-61, Darocur 1116,1173 (manufactured by Ciba Specialty Chemicals Co., Ltd.), Lucirin TPO (manufactured by BASF), Ubecryl P36 (manufactured by UCB), Ezacure KIP150, KIP65LT, KIP100F, KT37, KT55, KTO46, KIP75/B (manufactured by Lamberti), and the like can be given.

The amount of the radical polymerization initiator (E) optionally used in the present invention is preferably 0.01-20 parts by weight, and still more preferably 0.1-10 parts by weight for 100 parts by weight of the composition (total weight of reactive particles (A), compound (B), and compound (C)). If the amount is less than 0.01 parts by weight, hardness of the cured product may be inadequate. If the amount is more than 20 parts by weight, the inner layer may remain uncured during curing operation.

When curing the composition of the present invention, a photopolymerization initiator and a heat-polymerization initiator can be used in combination, as required.

As preferable examples of a heat-polymerization initiator, peroxides, azo compounds, and like can be given. Specific examples include benzoyl peroxide, t-butyl-peroxybenzoate, azobisisobutyronitrile, and the like.

### 6. Other component

The curable composition of the present invention may include additives such as a photosensitizer, polymerization inhibitor, polymerization adjuvant, leveling agent, wettability improver, surfactant, plasticizer, UV absorber, antioxidant, antistatic agent, inorganic filler, pigment, dye, and the like insofar as the effects of the present invention are not impaired.

### 7. Method of applying the composition

The composition of the present invention can suitably be used as an antireflection film or a coating material. Examples of substrates to which the composition can be applied are plastics (polycarbonate, polymethacrylate, polystyrene, polyester, polyolefin, epoxy resins, melamine resins, triacetyl cellulose resins, ABS resins, AS resins and norbornene resins), metals, wood, papers, glass, slates, and the like can be given. Such a substrate may be in the shape of a plate, film, or three-dimensional formed body. Conventional coating methods such as for example dip coating, spray coating, flow coating, shower coating, roll coating, brush coating, can be employed as a coating method. The thickness of the film after drying and curing is generally 0.1-400 µm, and preferably 1-200 µm.

In order to adjust the film thickness, the composition of the present invention can be used by diluting with a solvent. For example, when used as an antireflection film or a coating material, the viscosity of the composition is usually 0.1-50,000 mPa·s/25°C, and preferably 0.5-10,000 mPa·s/25°C.

### 8. Method of curing the composition

The composition of the present invention is cured by heat and/or radioactive rays (light). In the case of curing the composition by heat, an electric heater, infrared ray lamp, hot blast, and the like can be used as the heat source. In the case of curing the composition using radioactive rays (light), there are no specific limitations to the source of the radioactive rays insofar as the composition can be cured in a short period of time after coating. As examples of the source of infrared rays, a lamp, resistance heating plate, laser, and the like can be given. As examples of the source of visible rays, sunlight, a lamp, fluorescent lamp, laser, and the like can be given. As the source of ultraviolet rays, a mercury lamp, halide lamp, laser, and the like can be given. As examples of the source of electron beams, a system of utilizing thermoelectrons produced by a commercially available tungsten filament, a cold cathode method generating electron beams by passing a high voltage pulse through a metal, and a secondary electron method which utilizes secondary electrons produced by the collision of ionized gaseous molecules and a metal electrode can be given. As the source of α-rays, β-rays, and γ-rays, for example, fissionable substances such as Co⁶⁰ and the like can be given. For γ-rays, a vacuum tube which causes an acceleration electron to collide with an anode and the like can be utilized. These radioactive rays can be used either individually or in combination of two or more. In the latter case, the two or more radioactive rays may be used either simultaneously or at certain intervals of time.

### II. Cured product

The cured product of the present invention can be obtained by applying the curable composition to various substrates such as a plastic substrate, and curing the composition. Specifically, the cured product can be obtained as a coating body by applying the composition to a substrate, removing volatile components from the composition by drying, preferably at 0-200°C, and then curing the composition using heat and/or radioactive rays. Curing using heat is preferably performed at 20-150°C for 10 seconds to 24 hours. When using radioactive rays, use of ultraviolet rays or electron beams is preferable. The dose of ultraviolet rays is preferably 0.01-10 J/cm², and still more preferably 0.1-2 J/cm². Electron beams are preferably irradiated with an applied voltage of 10-300 KV and an electron density of 0.02-0.30 mA/cm² at a dose of 1-10 Mrad.

Since the cured product of the present invention has high hardness and a high refractive index and is capable of forming a coating (film) exhibiting excellent scratch resistance and superior adhesion to substrates as well as a layer with a low refractive index, the cured product is particularly suitable as an antireflection film for film-type liquid crystal elements, touch panels, or plastic optical parts.

### III. Laminate

The laminate of the present invention is formed by laminating a cured film produced by curing the curable composition on a substrate, and then laminating a film with a low refractive index on the cured film. The laminate particularly suitable as an antireflection film.

There are no specific limitations to the substrate used in the present invention. When used as an antireflection film, substrates made of plastics (polycarbonate, polymethylmethacrylate, polystyrene, polyester, polyolefin, epoxy resins, melamine resins, triacetyl cellulose resins, ABS resins, AS resins, norbornene resins, and the like) can be given as examples.

As examples of the film with a low refractive index used in the present invention, films made of metal oxides such as magnesium fluoride and silicon dioxide, cured films of fluorine-type coating materials with a refractive index of 1.38-1.45, and the like can be given.

Another film may be present between the high-refractive-index cured film and the low-refractive-index film or between the substrate and the high-refractive-index cured film. For example, a hard coat layer or a reflection preventive layer may be provided between the substrate and the high-refractive-index cured film.

Vacuum deposition and sputtering are suitable methods of forming a film of a metal oxide having a low refractive index on the cured film having a high refractive index produced by curing the curable composition. The same methods can be used to apply a fluorine-type coating material to the cured film.

The reflection of light from the surface of the substrate can be effectively prevented by applying the composition of the present invention on the substrate, curing the composition by applying heat or radiation to the composition and applying the film with a low refractive index on the cured film.

The laminate of the present invention is particularly suitable as an antireflection film for film-type liquid crystal elements, touch panels, or plastic optical parts due to low reflectance and excellent chemical resistance.

### Examples

The present invention will be described in more detail by examples, which should not be construed as limiting the present invention. In the following examples, "parts" and "%" respectively refer to "parts by weight" and "wt%" unless otherwise indicated.

In the present invention, "solid content" refers to the content of components excluding volatile components such as solvents from the dispersion liquid, specifically, "solid content" refers to the content of a residue (nonvolatile components) obtained by drying the composition on a hot plate at 175°C for one hour.

### Preparation Example 1: Preparation of oxide particles (Aa)

300 parts of fine spherical zirconia particles (manufactured by Sumitomo Osaka Cement Co., Ltd., number average primary particle diameter: 0.01 µm) were added to 700 parts of methyl ethyl ketone (MEK) and dispersed for 168 hours using glass beads. The glass beads were removed to obtain 950 parts of methyl ethyl ketone zirconia sol (Aa). 2 g of the dispersion sol was weighed in an aluminum dish and dried at 120°C for one hour on a hot plate. The dried product was weighed to indicate that the solid content was 30%. As a result of electron microscope observation of the solid product, the minor axis average particle diameter was 15 nm, the major axis average particle diameter was 20 nm, and the aspect ratio was 1.3.

### Preparation Example 2: Preparation of organic compound (Ab having polymerizable unsaturated group

20.6 parts of isophorone diisocyanate were added dropwise to 7.8 parts of mercaptopropyltrimethoxysilane and 0.2 part of dibutyltin dilaurate in a vessel equipped with a stirrer at 50°C for one hour in dry air. The mixture was stirred at 60°C for three hours.

After the addition of 71.4 parts of pentaerythritol triacrylate dropwise at 30°C for one hour, the mixture was stirred at 60°C for three hours to obtain a reaction solution.
The residual isocyanate content in the reaction product (organic compound having a polymerizable unsaturated group) in the reaction solution was analyzed by FT-IR and found to be 0.1 wt% or less. This indicates that each reaction was completed almost quantitatively. The organic compound had a thiourethane bond, urethane bond, alkoxysilyl group, and acryloyl group (polymerizable unsaturated group) in the molecule.

### Preparation Example 3: preparation of fine reactive zirconia powder sol (A-1)

A mixture of 5.2 parts of the organic compound (Ab) having a polymerizable unsaturated group prepared in Preparation Example 2, 237 parts of methyl ethyl ketone zirconia sol (Aa) (zirconia content: 30%) prepared in Preparation Example 1, 0.1 part of ion-exchanged water, and 0.03 part of p-hydroxyphenyl monomethyl ether was stirred at 60°C for three hours. After the addition of 1.0 part of methyl orthoformate, the mixture was stirred for one hour at the same temperature to obtain reactive particles (dispersion liquid (A-1)). 2 g of the dispersion liquid (A-1) was weighed in an aluminum dish and dried on a hot plate at 120°C for one hour. The dried product was weighed to confirm that the solid content was 31%. 2 g of the dispersion liquid (A-1) was weighed in a magnetic crucible, predried on a hot plate at 80°C for 30 minutes, and sintered at 750°C for one hour in a muffle furnace. The inorganic content in the solid content was determined from the resulting inorganic residue to confirm that the inorganic content was 93%.

### Preparation Example 4: preparation of fine reactive silica powder sol (A-2)

A mixture of 8.7 parts of the organic compound (Ab) having a polymerizable unsaturated group prepared in Preparation Example 2, 91.3 parts of silica particle sol (methyl ethyl ketone silica sol, "MEK-ST" manufactured by Nissan Chemical Industries, Ltd., number average particle diameter: 0.022 µm, silica content: 30%) (27 parts as silica particles), and 0.1 part of ion-exchanged water was stirred at 60°C for three hours. After the addition of 1.4 parts of methyl orthoformate, the mixture was stirred at 60°C for one hour to obtain reactive particles (dispersion liquid (A-2)). 2 g of the dispersion liquid (A-2) was weighed in an aluminum dish and dried on a hot plate at 175°C for one hour. The dried product was weighed to confirm that the solid content was 35%.

### Example 1

164.6 parts of the fine reactive zirconia powder sol (A-1) prepared in the Preparation Example 3 (reactive zirconia: 51.0 parts), 35.8 parts of dipentaerythritol pentacrylate (C-1) ("KAYARAD DPHA-2C" manufactured by Nippon Kayaku Co., Ltd.), 113.6 parts of methyl isobutyl ketone (hereinafter abbreviated as MIBK) were mixed in a UV shielding vessel. The mixture was condensed using a rotary evaporator until the solid content was 65.5%. After the addition of 6.2 parts of a melamine compound (B-1) ("Cymel 238" manufactured by Mitsui-Cytec, Ltd., mixed alkylated melamine; in the formula (2), n = 1.8 on average, 40 mol% of X and Y which is hydrogen or an alkyl group is an isobutyl group, with the remaining 60 mol% being a methyl group), 4.0 parts of Catalyst 4050 (D-1) (manufactured by Mitsui-Cytec, Ltd., isopropyl alcohol solution, solid content: 55 wt%), 1.9 parts of 1-hydroxycyclohexyl phenyl ketone (E-1), 1.1 part of 2-methyl-1-[4-(methylthio)phenyl]-2-morpholinopropane-1 (E-2), and 51.2 parts of MIBK to the condensed product, the mixture was stirred at 30°C for two hours to obtain a homogeneous composition solution. The solid content of the composition determined in the same manner as in the Preparation Example 3 was 50%.

### Examples 2-5

Compositions of Examples 2-5 were obtained in the same manner as in Example 1 except for changing the compositions as shown in Table 1.

### Example 6

A composition of Example 6 was obtained in the same manner as in Example 1 except for using 3.1 parts of melamine acrylate (C-2) which is a melamine compound having a polymerizable unsaturated group ("Nikalac MX-302" manufactured by Sanwa Chemical Co., Ltd.) instead of a part of the melamine compound (B-1).

### Example 7

A composition of Example 7 was obtained in the same manner as in Example 1 except for using 6.2 parts of a melamine compound (B-2) ("XV805" manufactured by Mitsui-Cytec, Ltd., mixed alkylated melamine; in the formula (2), n = 2 on average, 25 mol% of X and Y which is hydrogen or an alkyl group is an isobutyl group, with the remaining 75 mol% being a methyl group) instead of the melamine compound (B-1).

### Example 8

A composition of Example 8 was obtained in the same manner as in Example 1 except for using 6.2 parts of a melamine compound (B-3) ("XM2819" manufactured by Mitsui-Cytec, Ltd., mixed alkylated melamine; in the formula (2), n = 2 on average, 75 mol% of X and Y which is hydrogen or an alkyl group is an isobutyl group, with the remaining 25 mol% being a methyl group) instead of the melamine compound (B-1).

### Example 9

A composition of Example 9 was obtained in the same manner as in Example 1 except for using the fine reactive silica powder sol (A-2) prepared in Preparation Example 4 instead of the reactive particles (A-1) and changing the amount of each compound as shown in Table 1.

### Example 10

A composition of Example 10 was obtained in the same manner as in Example 1 except for using 6.2 parts of a melamine compound (B-4) ("Cymel 303" manufactured by Mitsui-Cytec, Ltd., fully methylated melamine; in the formula (2), n = 1.8 on average, X and Y which is hydrogen or an alkyl group are methyl groups) instead of the melamine compound (B-1).

### Comparative Examples 1 and 2

Compositions of Comparative Examples 1 and 2 were prepared in the same manner as in Example 1 except for changing the compositions as shown in Table 1.

### Comparative Example 3

A composition of Comparative Example 3 was obtained in the same manner as in Example 1 except for using the fine reactive silica powder sol (A-2) prepared in Preparation Example 4 instead of the reactive particles (A-1) and changing the amount of each compound as shown in Table 1.

### Laminate

Preparation Example 5: preparation of curable composition (coating liquid A) for low-refractive-index film

### 1) Preparation of fluorine-containing polymer having hydroxyl group

The atmosphere in a stainless steel autoclave (1.5 l) equipped with an electromagnetic stirrer was sufficiently replaced with nitrogen gas. The autoclave was charged with 500 g of ethyl acetate, 34.0 g of ethyl vinyl ether (EVE), 41.6 g of hydroxyethyl vinyl ether (HEVE), 75.4 g of perfluoropropyl vinyl ether (FPVE), 1.3 g of lauroyl peroxide, 7.5 g of silicone-containing high polymer azo initiator ("VPS1001" manufactured by Wako Pure Chemical, Ltd.), and 1 g of a reactive emulsifying agent ("NE-30" Manufactured by Asahi Denka Co., Ltd.). After cooling the mixture to -50°C with dry ice-methanol, oxygen contained in the system was removed by nitrogen gas.

After the addition of 119.0 g of hexafluoropropylene (HFP), the temperature in the autoclave was increased. The pressure was 5.5 × 10⁵ Pa when the temperature in the autoclave reached 70°C. The reaction was allowed to proceed at 70°C for 20 hours while stirring. When the pressure was decreased to 2.3 × 10⁵ Pa, the reaction was terminated by cooling the autoclave with water. After the temperature in the autoclave reached room temperature, unreacted monomers were removed. The autoclave was opened to obtain a polymer solution with a solid content of 30 wt%. The resulting polymer solution was poured into methanol to precipitate the polymer. The precipitate was washed with methanol and dried at 50°C under vacuum to obtain 170 g of a fluorine-containing polymer having a hydroxyl group.

The intrinsic viscosity of the resulting fluorine-containing polymer having a hydroxyl group measured at 25°C using an N,N-dimethylacetamide solvent was 0.28 dl/g.

The glass transition temperature of the fluorine-containing polymer determined using a differential scanning calorimeter (DSC) at a temperature increase rate of 5°C/min. in a nitrogen stream was 31 °C.

The fluorine content of the fluorine-containing polymer determined by an alizarin complexone method was 51.7%.

The hydroxyl value of the fluorine-containing polymer determined by an acetylation method using acetic anhydride was 102 mg KOH/g.

### 2) Preparation of curable composition (coating liquid A) for low-refractive-index film

A vessel equipped with a stirrer was charged with 100 g of the fluorine-containing copolymer having a hydroxyl group obtained in 1), 11.1 g of Cymel 303 (manufactured by Mitsui-Cytec, Ltd.), and 3,736 g of methyl isobutyl ketone (MIBK). The mixture was stirred at 110°C for five hours to allow the fluorine-containing copolymer having a hydroxyl group to react with the Cymel 303.

After the addition of 11.1 g of Catalyst 4040 (manufactured by Mitsui-Cytec, Ltd., solid content: 40 wt%), the mixture was stirred for 10 minutes to obtain a curable composition for a low-refractive-index film having a viscosity of 1 mPa·s (measured at 25°C) (hereinafter may be called "coating liquid A").

The refractive index of a low-refractive-index film obtained from the resulting curable composition for a low-refractive-index film (coating liquid A) was measured.

The curable composition for a low-refractive-index film was applied to a silicon wafer (thickness: 1 µm) using a wire bar coater (#3) and air-dried at room temperature for five minutes to form a coat. The coat was cured by heating at 140°C for one minute in an air dryer to obtain a low-refractive-index film with a thickness of 0.3 µm. The refractive index of the resulting low-refractive-index film at a Na-D line was measured at 25°C using a spectroscopic ellipsometer. The refractive index was 1.40.

### Example 11: preparation of antireflection film laminate

Each of the compositions obtained in Examples 1-10 of the present invention and Comparative Example 1-3 was applied to a polyester film ("A4300" manufactured by Toyobo Co., Ltd., thickness: 188 µm) using a wire bar coater (#6) and dried at 80°C for one minute in an oven to form a coat. The coat was cured by irradiation of UV rays at a dose of 0.3 J/cm² using a metal halide lamp in air to obtain a high-refractive-index film with a thickness of 3 µm.

The coating liquid A was applied to the high-refractive-index film using a wire bar coater (#3) and air-dried at room temperature for five minutes to form a coat. The coat was cured by heating at 140°C for one minute in an oven to form a low-refractive-index film with a thickness of 0.1 µm, to obtain an antireflection film laminate.

### Evaluation example: evaluation of antireflection film laminate

Scratch resistance, reflectance, turbidity (Haze value), and total light transmittance of the antireflection film laminate obtained in Example 11 were measured or evaluated according to methods given below.

### 1) Reflectance

The reflectance (minimum reflectance in measurement wavelength region) of the antireflection film laminate was measured at a wavelength of 340-700 nm using a spectrophotometric reflectance measurement system (spectrophotometer "U-3410" manufactured by Hitachi Ltd. equipped with large sample compartment integrating sphere "150-09090") according to JIS K7105 (measurement method A).

Specifically, the minimum reflectance of the antireflection film laminate (antireflection film) at each wavelength was measured while employing the reflectance of a deposited aluminum film as a standard (100%). The results are shown in Table 1.

### 2 Total light transmittance and turbidity (Haze value)

The total light transmittance and the Haze value of the antireflection film laminate were measured according to JIS K7105 using a color Haze meter (manufactured by Suga Test Instruments Co., Ltd.). The results are shown in Table 1.

### 3) Scratch resistance

The surface of the antireflection film laminate was rubbed with #0000 steel wool 10 times at a load of 200 g/cm² to evaluate the scratch resistance of the antireflection film laminate by naked eye observation according to the following criteria. The results are shown in Table 1.
Grade 5: No scratch was observed.
Grade 4: 1-5 scratches were observed.
Grade 3: 6-50 scratches were observed.
Grade 2: 51-100 scratches were observed.
Grade 1: Peeling of coat was observed.

A laminate with a scratch resistance of grade 2 or more is allowable in actual application. A laminate with a scratch resistance of grade 4 or more is preferable due to excellent durability in actual application. A laminate with a scratch resistance of grade 5 is still more preferable because durability in actual application is significantly improved.

**[Table 1]**

| | Example | | | | | | | | | | Comparative Example | | |
|---|---|---|---|---|---|---|---|---|---|---|---|---|---|
| | 1 | 2 | 3 | 4 | 5 | 6 | 7 | 8 | 9 | 10 | 1 | 2 | 3 |
| Reactive particles (A)* | | | | | | | | | | | | | |
| A-1 | 51.0 | 51.0 | 51.0 | 19.1 | 77.3 | 51.0 | 51.0 | 51.0 | | 51.0 | 51.0 | 51.0 | |
| A-2 | | | | | | | | | 44.8 | | | | 49.3 |
| Melamine compound (B) | | | | | | | | | | | | | |
| B-1 | 6.2 | 6.2 | 10.0 | 30.0 | 2.0 | 3.1 | | | 5.6 | | | | |
| B-2 | | | | | | | 6.2 | | | | | | |
| B-3 | | | | | | | | 6.2 | | | | | |
| B-4 | | | | | | | | | | 6.2 | | | |
| Polyfunctional (meth)acrylate (C) | | | | | | | | | | | | | |
| C-1 | 35.8 | 39.8 | 32.0 | 43.9 | 11.7 | 35.8 | 35.8 | 35.8 | 41.8 | 35.8 | 46.0 | 35.8 | 46.1 |
| C-2 | | | | | | 3.1 | | | | | | | |
| Acid generator (D) | | | | | | | | | | | | | |
| D-1 | 4.0 | - | 4.0 | 4.0 | 4.0 | 4.0 | 4.0 | 4.0 | 3.6 | 4.0 | | 10.2 | |
| Photoinitiator (E) | | | | | | | | | | | | | |
| E-1 | 1.9 | 1.9 | 1.9 | 1.9 | 1.9 | 1.9 | 1.9 | 1.9 | 2.6 | 1.9 | 1.9 | 1.9 | 2.9 |
| E-2 | 1.1 | 1.1 | 1.1 | 1.1 | 1.1 | 1.1 | 1.1 | 1.1 | 1.6 | 1.1 | 1.1 | 1.1 | 1.7 |
| Organic solvent | | | | | | | | | | | | | |
| MEK | 4.6 | 7.9 | 4.6 | 4.6 | 4.6 | 4.6 | 4.6 | 4.6 | 15.2 | 4.6 | 7.9 | 4.6 | 15.7 |
| MIBK | 92.1 | 92.1 | 92.1 | 92.1 | 92.1 | 92.1 | 92.1 | 92.1 | 92.1 | 92.1 | 92.1 | 87.1 | 84.3 |
| Isopropyl alcohol | 3.3 | | 3.3 | 3.3 | 3.3 | 3.3 | 3.3 | 3.3 | 3.1 | 3.3 | | 8.3 | |
| Total | 200.0 | 200.0 | 200.0 | 200.0 | 200.0 | 200.0 | 200.0 | 200.0 | 200.0 | 200.0 | 200.0 | 200.0 | 200.0 |
| Solid content (%) | 50.0 | 50.0 | 50.0 | 50.0 | 50.0 | 50.0 | 50.0 | 50.0 | 50.0 | 50.0 | 50.0 | 50.0 | 50.0 |
| Properties of laminate | | | | | | | | | | | | | |
| Reflectance (%) | 0.4 | 0.4 | 0.4 | 0.7 | 0.1 | 0.4 | 0.4 | 0.4 | 1.2 | 0.4 | 0.4 | 0.4 | 1.2 |
| Total light transmittance (%) | 91 | 91 | 91 | 90 | 91 | 91 | 91 | 90 | 91 | 90 | 90 | 90 | 90 |
| Haze value (%) | 1.4 | 1.4 | 1.4 | 1.4 | 1.3 | 1.4 | 1.4 | 1.4 | 1.3 | 1.4 | 1.3 | 1.4 | 1.3 |
| Scratch resistance | 4 | 3 | 3 | 3 | 3 | 4 | 4 | 4 | 3 | 2 | 1 | 1 | 1 |

In Table 1, the amount of the reactive particles (A)^{*} indicates the weight of dry fine powder included in each dispersion sol (excluding organic solvent).

The meanings of abbreviations shown in Table 1 are as follows.
A-1: Reactive zirconia sol prepared in Preparation Example 3
A-2: Reactive silica sol prepared in Preparation Example 4
B-1: Melamine compound (Cymel 238 manufactured by Mitsui-Cytec, Ltd.)
B-2: Melamine compound (XV 805 manufactured by Mitsui-Cytec, Ltd.)
B-3: Melamine compound (XM 2819 manufactured by Mitsui-Cytec, Ltd.)
B-4: Melamine compound (Cymel 303 manufactured by Mitsui-Cytec, Ltd.)
C-1: Dipentaerythritol hexaacrylate
C-2: Melamine acrylate (Nikalac MX-302 manufactured by Sanwa Chemical Co., Ltd.)
D-1: Catalyst 4050 (manufactured by Mitsui-Cytec, Ltd.)
E-1: 1-Hydroxycyclohexyl phenyl ketone
E-2: 2-Methyl-1-[4-(methylthio)phenyl]-2-morpholinopropanone-1
MEK: Methyl ethyl ketone
MIBK: Methyl isobutyl ketone

## Claims

1. , A curable composition comprising:
(A) particles prepared by bonding at least one oxide of an element selected from the group consisting of silicon, aluminum, zirconium, titanium, zinc, germanium, indium, tin, antimony, and cerium, and an organic compound which comprises a polymerizable group,
(B) a compound having a melamine group and having no polymerizable unsaturated group
(C) a compound having at least two polymerizable groups in the molecule other than the component (B).

2. The curable composition according to claim 1 wherein the polymerizable groups of compounds (A) and (C) are polymerizable unsaturated groups.

3. The curable composition according claims 1 or 2, wherein the organic compound included in the particles of the component (A) comprises a group shown by the following formula (1) in addition to the polymerizable group: 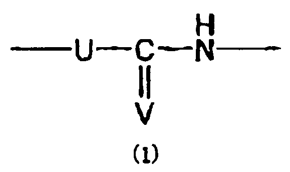 wherein U represents NH, O (oxygen atom), or S (sulfur atom), and V represents O or S.

4. The curable composition according to anyone of claims 1-3, wherein the component (B) is at least one of the compounds shown by the following formula I (2) 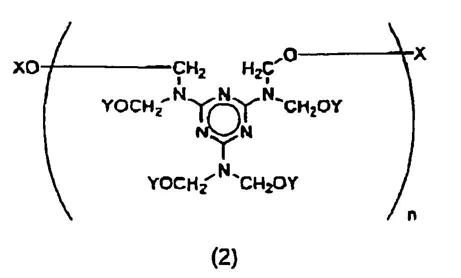 wherein X individually represents a hydrogen atom, an organic group having 1-20 C-atoms, Y individually represents a hydrogen atom or an organic group having 1-20 C-atoms, or a monovalent organic group shown by the following formula (3), and n is an integer from 1 to 20, 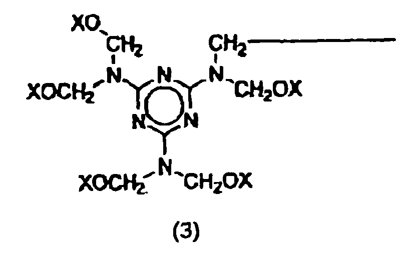 wherein X individually represents a hydrogen atom or an organic group having 1-20 carbon atoms,

5. The curable composition according to claim 4, wherein X individually represents a hydrogen atom or an alkyl group having 1-10 carbon atoms, Y individually represents a hydrogen atom or an alkyl group having 1-10 carbon atoms

6. The curable composition according to claim 4 or 5, wherein at least 25 mol% of substituents X and Y in formula (2) is an isobutyl group.

7. The curable composition according to anyone of claims 1-6. wherein the content of compound (B) is from 0.01 to 30 wt% of the total weight of the components (A), (B), and (C).

8. The curable composition according to anyone of claims 1-7, further comprising (D) an acid generator.

9. The curable composition according to anyone of claims 1-8, wherein the composition further comprises (E) a radical photoinitiator.

10. A cured product produced by curing the curable composition according to any one of the claims 1-9.

11. Process for producing a laminate by applying a curable composition as defined in anyone of claims 1-9 on a substrate, curing the curable composition to form a cured film, and laminating a film with a low refractive index on the cured film.

12. Laminate obtainable according to the process of claim 11.

## Patentansprüche

1. Härtbare Zusammensetzung, umfassend:
(A) Teilchen, hergestellt durch Verbinden von mindestens einem Oxid eines Elements, ausgewählt aus der Gruppe, bestehend aus Silizium, Aluminium, Zirkonium, Titan, Zink, Germanium, Indium, Zinn, Antimon und Cer, und einer organischen Verbindung, welche eine polymerisierbare Gruppe umfaßt,
(B) eine Verbindung, die eine Melamingruppe aufweist und keine polymerisierbare ungesättigte Gruppe aufweist,
(C) eine Verbindung mit mindestens zwei polymerisierbaren Gruppen in dem Molekül, verschieden von der Komponente (B),

2. Härtbare Zusammensetzung gemäß Anspruch 1, wobei die polymerisierbaren Gruppen der Verbindungen (A) und (C) polymerisierbare ungesättigte Gruppen sind.

3. Härtbare Zusammensetzung gemäß Anspruch 1 oder 2, wobei die in die Teilchen der Komponente (A) eingebrachte organische Verbindung zusätzlich zu der polymerisierbaren Gruppe eine Gruppe umfaßt, gezeigt durch die folgende Formel (1): 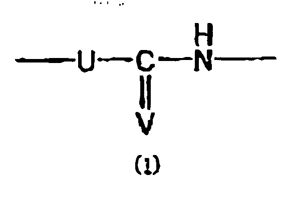 worin U NH, O (Sauerstoffatom) oder S (Schwefelatom) darstellt, und V O oder S darstellt.

4. Härtbare Zusammensetzung gemäß einem der Ansprüche 1-3, wobei die Komponente (B) mindestens eine der Verbindungen, gezeigt durch die folgende Formel (2) 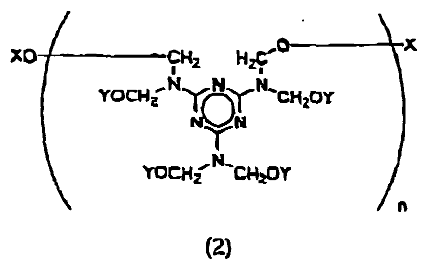 worin X unabhängig voneinander ein Wasserstoffatom, einen organischen Rest mit 1-20 C-Atomen darstellt, Y unabhängig voneinander ein Wasserstoffatom oder einen organischen Rest mit 1-20 C-Atomen darstellt, oder eine einwertige organische Gruppe ist, gezeigt durch die folgende Formel (3), und n eine ganze Zahl von 1 bis 20 ist, 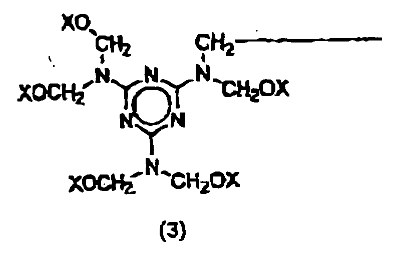 worin X unabhängig voneinander ein Wasserstoffatom oder einen organischen Rest mit 1-20 Kohlenstoffatomen darstellt.

5. Härtbare Zusammensetzung gemäß Anspruch 4, worin X unabhängig voneinander ein Wasserstoffatom oder einen Alkylrest mit 1-10 Kohlenstoffatomen darstellt, Y unabhängig voneinander ein Wasserstoffatom oder einen Alkylrest mit 1-10 Kohlenstoffatomen darstellt.

6. Härtbare Zusammensetzung gemäß Anspruch 4 oder 5, wobei mindestens 25 Mol-% der Substituenten X und Y in Formel (2) eine Isobutylgruppe ist.

7. Härtbare Zusammensetzung gemäß einem der Ansprüche 1-6, wobei der Gehalt der Verbindung (B) 0,01 bis 30 Gew.-% des Gesamtgewichts der Komponenten (A), (B) und (C) beträgt.

8. Härtbare Zusammensetzung gemäß einem der Ansprüche 1-7, weiter umfassend (D) einen Säurebildner.

9. Härtbare Zusammensetzung gemäß einem der Ansprüche 1-8, wobei die Zusammensetzung weiter (E) einen radikalischen Photoinitiator umfaßt.

10. Gehärtetes Produkt, hergestellt durch Härten der härtbaren Zusammensetzung gemäß einem der Ansprüche 1-9.

11. Verfahren zur Herstellung eines Laminats durch Aufbringen einer härtbaren Zusammensetzung, wie in einem der Ansprüche 1-9 definiert, auf ein Substrat, Härten der härtbaren Zusammensetzung unter Bildung eines gehärteten Films und Laminieren eines Films mit einem niedrigen Brechungsindex auf den gehärteten Film.

12. Laminat, erhältlich durch das Verfahren gemäß Anspruch 11.

## Revendications

1. Composition durcissable comprenant :
(A) des particules préparées par liaison d'au moins un oxyde d'un élément choisi dans le groupe constitué du silicium, de l'aluminium, du zirconium, du titane, du zinc, du germanium, de l'indium, de l'étain, de l'antimoine et du cérium, et d'un composé organique comprenant un groupe polymérisable,
(B) un composé ayant un groupe mélamine, mais n'ayant aucun groupe polymérisable insaturé,
(C) un composé, autre que le composant (B), ayant au moins deux groupes polymérisables dans la molécule.

2. Composition durcissable selon la revendication 1, dans laquelle les groupes polymérisables des composés (A) et (C) sont des groupes polymérisables insaturés.

3. Composition durcissable selon la revendication 1 ou 2, dans laquelle le composé organique inclus dans les particules du composant (A) comprend un groupe de formule (1) suivante en plus du groupe polymérisable ; 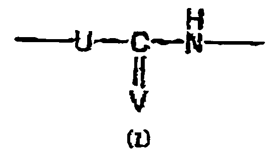 dans laquelle U représente NH, O (atome d'oxygène) ou S (atome de soufre) et V représente O ou S.

4. Composition durcissable selon l'une quelconque des revendications 1 à 3, dans laquelle le composant (B) est au moins l'un des composés de formule (2) suivante : 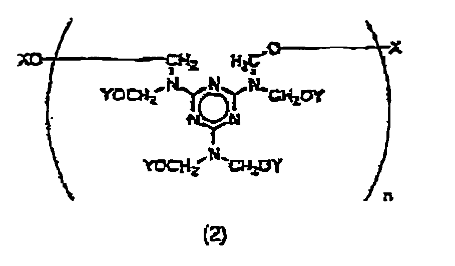 dans laquelle chaque X représente individuellement un atome d'hydrogène, un groupe organique ayant de 1 à 20 atomes de carbone, chaque Y représente individuellement un atome d'hydrogène ou un groupe organique ayant de 1 à 20 atomes de carbone, ou encore un groupe organique monovalent de formule (3) suivante, et n est un nombre entier compris entre 1 et 20, 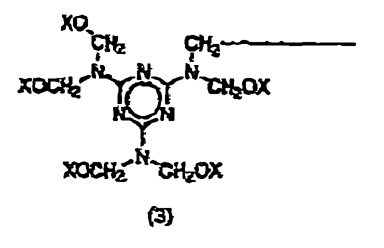 dans laquelle chaque X représente individuellement un atome d'hydrogène ou un groupe organique ayant de 1 à 20 atomes de carbone.

5. Composition durcissable selon la revendication 4, dans laquelle X représente individuellement un atome d'hydrogène ou un groupe alkyle ayant de 1 à 10 atomes de carbone , Y représente individuellement un atome d'hydrogène ou un groupe alkyle ayant de 1 à 10 atomes de carbone.

6. Composition durcissable selon la revendication 4 ou 5, dans laquelle au moins 25 % en moles des substituants X et Y dans la formule (2) correspondent à un groupe isobutyle.

7. Composition durcissable selon l'une quelconque des revendications 1 à 6, dans laquelle la teneur en composé (B) est comprise entre 0,01 et 30 % en poids du poids total des composants (A), (B) et (C).

8. Composition durcissable selon l'une quelconque des revendications 1 à 7, comprenant en outre un générateur d'acide (D).

9. Composition durcissable selon l'une quelconque des revendications 1 à 8, comprenant en outre un photoinitiateur de radicaux (E).

10. Produit durci obtenu en faisant durcir la composition durcissable selon l'une quelconque des revendications 1 à 9.

11. Procédé de production d'un stratifié par application d'une composition durcissable comme définie dans l'une quelconque des revendications 1 à 9 sur un substrat, par durcissage de la composition durcissable pour obtenir une pellicule durcie et par application d'une pellicule présentant un faible indice de réfraction sur la pellicule durcie.

12. Stratifié pouvant être obtenu selon le procédé de la revendication 11.
